# FASCICULE DE BREVET EUROPEEN

(11) **EP 4 511 584 B1**
(45) Date de publication et mention de la délivrance du brevet: **10.06.2026**
(21) Numéro de dépôt: 23734135.9
(22) Date de dépôt: 19.04.2023
(51) Int. Cl.: F16H 63/30

(54) **DISPOSITIF DE SÉLECTION D'AU MOINS UN RAPPORT AU SEIN D'UNE BOÎTE DE VITESSES**
VORRICHTUNG ZUR AUSWAHL VON MINDESTENS EINEM GANG INNERHALB EINES GETRIEBES
DEVICE FOR SELECTING AT LEAST ONE GEAR WITHIN A GEARBOX

(30) Priorité: 19.04.2022 FR 2203609
(43) Date de publication de la demande: 26.02.2025
(73) Titulaire: VALEO EMBRAYAGES, 80009 Amiens (FR)
(72) Inventeur: MAUREL, Herve, 80000 Amiens (FR)
(74) Mandataire: Valeo Powertrain Systems
(86) Numéro de dépôt international: PCT/EP2023/060125
(87) Numéro de publication internationale: WO 2023/203073

(56) Documents cités:
- FR-A1- 2 988 800
- JP-A- 2012 072 829
- JP-A- S59 108 124
- US-A- 4 529 080
- US-A- 4 770 280

## Description

La présente invention concerne le domaine des dispositifs de commande interne des rapports d'une boîte de vitesses, et plus particulièrement les dispositifs de sélection de tels rapports.

Les dispositifs de sélection permettent un crabotage entre un baladeur mobile axialement et au moins un pignon fou, généralement deux pignons fous. Le ou les pignons fous sont montés libres autour d'un arbre et le baladeur est couplé en rotation avec cet arbre. Ainsi, le crabotage d'un pignon fou permet de solidariser en rotation ce pignon fou avec cet arbre. Le déplacement axial du baladeur est placé sous la dépendance d'une fourchette de sélection d'au moins un rapport, généralement de deux rapports. Un tel crabotage s'effectue lors d'une correspondance angulaire entre les dents de crabotage du baladeur et les dents de crabotage du ou des deux pignons fous.

De tels dispositifs de sélection peuvent être utilisés dans certaines boîtes de vitesses robotisées, dans lesquelles la sélection des rapports est commandée par un actionneur tel qu'un actionneur électromécanique, hydraulique, magnétique, pneumatique.... La correspondance angulaire entre les dents de crabotage du baladeur et les dents de crabotage d'un pignon fou est difficile à réaliser en raison d'un risque d'interférence empêchant l'engrènement. Il peut alors être nécessaire de stocker l'énergie cinétique issue de l'actionneur, le temps que les dentures de crabotage du baladeur et du pignon fou sélectionné se positionnent en correspondance angulaire.

Un système autorisant un tel stockage d'énergie est connu du document FR2988800A1. Un inconvénient de ce système réside dans son encombrement important au sein de la boîte de vitesses, notamment son encombrement axial.

Les documents US4770280A, US4529080A et JP2012072829A divulguent également des dispositifs de sélection comprenant un dispositif de stockage d'énergie.

La présente invention vise à pallier cet inconvénient en proposant un dispositif de sélection équipé d'un dispositif d'accumulation d'énergie qui autorise ce stockage d'énergie en cas d'interférence quand la fourchette de sélection cherche à engager le baladeur avec le pignon sélectionné. Cela accorde ainsi au dispositif de sélection une certaine souplesse dans son fonctionnement. Un tel dispositif d'accumulation d'énergie présente un encombrement axial réduit, ce qui permet un gain de place au sein de la boîte de vitesses.

La présente invention a ainsi pour principal objet un dispositif de sélection d'au moins un rapport au sein d'une boîte de vitesses, comprenant une tige de commande s'étendant selon un axe principal, une fourchette de sélection d'au moins un rapport solidaire de cette tige de commande, un organe de commande coulissant sur la tige de commande le long de l'axe principal, le dispositif de sélection comprenant au moins un dispositif d'accumulation d'énergie de la sélection d'au moins un rapport, caractérisé en ce que le dispositif d'accumulation d'énergie comprend au moins deux coulisseaux entre lesquels est interposé au moins un élément élastique, chaque coulisseau étant apte à translater sur la tige de commande le long de l'axe principal, et l'organe de commande comprenant au moins un premier bras et un deuxième bras chacun apte à pousser axialement respectivement l'un des coulisseaux le long de l'axe principal à l'encontre d'un effort de rappel exercé par l'élément élastique, le dispositif de sélection étant caractérisé en ce que le dispositif d'accumulation d'énergie et la fourchette de sélection sont disposés axialement entre le premier bras de l'organe de commande et le deuxième bras de l'organe de commande.

Le dispositif d'accumulation d'énergie correspond à un dispositif d'assistance, ici un dispositif d'amortissement. Ce dispositif d'accumulation d'énergie permet, notamment grâce à son élément élastique, d'accorder de la souplesse au dispositif de sélection lors de la sélection d'un rapport par la fourchette de sélection. Cette fourchette de sélection est disposée axialement sur la tige de commande, au moins en partie entre les deux bras de l'organe de commande ainsi qu'entre les coulisseaux du dispositif d'accumulation d'énergie ; plus précisément, elle est disposée entre les deux coulisseaux, eux-mêmes disposés axialement entre le premier et le deuxième bras de l'organe de commande. On comprend ici que la fourchette de sélection est disposée dans un espace borné d'un côté par un premier plan dans lequel s'étend principalement le premier bras de l'organe de commande et de l'autre par un deuxième plan dans lequel s'étend principalement le deuxième bras de cet organe de commande. Une telle disposition permet au dispositif de sélection de présenter un encombrement axial réduit. Les deux côtés de la fourchette sont exploités pour gérer la compression du dispositif d'accumulation d'énergie, ce qui permet de réduire l'encombrement global du dispositif de sélection et de recentrer l'encombrement du dispositif d'accumulation d'énergie axial sur la fourchette.

Avantageusement, l'élément élastique est précontraint.

Les premier et deuxième bras de l'organe de commande et les coulisseaux peuvent coulisser sur la tige de commande.

Selon un mode de réalisation, les deux coulisseaux et l'élément élastique sont disposés entre le premier bras de l'organe de commande et le deuxième bras de l'organe de commande.

Selon une caractéristique, le dispositif de sélection comprend au moins deux dispositifs d'arrêt, chaque dispositif d'arrêt étant associé à l'un des coulisseaux en le retenant par rapport à la tige de commande, dans une position de repos de l'organe de commande, en s'opposant à l'effort exercé par l'élément élastique.

Selon un mode de réalisation le dispositif de sélection comprend au moins deux dispositifs de butée, chaque dispositif de butée étant associé à l'un des coulisseaux ou l'un des premier et deuxième bras en le retenant par rapport à la tige de commande, dans un état de compression maximale prédéterminé de l'élément élastique, en s'opposant à une compression plus importante de l'élément élastique.

Chaque dispositif de butée est associé à l'un des coulisseaux en le retenant par rapport à la tige de commande, dans un état de compression maximale prédéterminé de l'élément élastique, en s'opposant à une compression plus importante de l'élément élastique, et chaque dispositif d'arrêt est bidirectionnel, chaque dispositif de butée étant formé au moins en partie par l'un des dispositifs d'arrêt. Autrement dit, chaque dispositif d'arrêt permet de retenir axialement l'un des coulisseaux dans une première direction axiale associée à la compression maximale prédéterminée de l'élément élastique et dans une deuxième direction axiale associée à la détente maximale prédéterminée (notamment en maintenant une précontrainte) de l'élément élastique.

Chaque coulisseau se déplace donc axialement entre deux positions extrêmes associées respectivement au repos du dispositif de sélection et à un état de compression maximal de l'élément élastique intervenant dans une situation d'interférence des dentures de crabotage.

L'élément élastique s'étend entre le premier coulisseau et le deuxième coulisseau et est précontraint entre ces deux éléments. Ainsi, l'élément élastique sera au moins partiellement comprimé entre le premier coulisseau et le deuxième coulisseau, et il opérera une poussée à chacune de ses extrémités et donc sur chacun de ces coulisseaux.

La présence de cet élément élastique permet d'accumuler de l'énergie lors de l'attente d'une coïncidence angulaire entre un moyeu d'entraînement et un pignon d'un rapport de vitesse, une telle coïncidence angulaire étant nécessaire à la sélection de ce rapport de vitesse.

Un jeu axial de montage j peut être présent entre le coulisseau le bras associé.

Selon une caractéristique de l'invention, au moins un des coulisseaux comprend au moins un orifice, la tige de commande présentant au moins un organe d'arrêt qui s'étend dans cet orifice, l'orifice étant configuré pour autoriser un déplacement, notamment une translation, du coulisseau par rapport à l'organe d'arrêt le long de l'axe principal de la tige de commande. L'organe d'arrêt fait notamment partie du dispositif d'arrêt.

Au moins un des coulisseaux présente une portion en forme de bague qui s'étend autour de la tige de commande. Cette portion en forme de bague comprend l'orifice au sein duquel s'étend l'organe d'arrêt solidaire de la tige de commande. Un tel organe d'arrêt peut par exemple être une goupille. De préférence, chaque coulisseau présente un tel orifice recevant cette goupille. L'orifice a une forme telle que le coulisseau peut translater le long de la tige de commande ; on comprend ainsi qu'il existe un espace axial entre la goupille et une paroi périphérique de l'orifice. À titre d'exemple, l'orifice est de forme oblongue ou son diamètre significativement plus grand que celui de la goupille, par exemple entre deux et trois fois plus grand.

Selon une autre caractéristique de l'invention, l'organe de commande comprend au moins un trou oblong, l'organe d'arrêt s'étendant dans ce trou oblong, le trou oblong étant configuré pour autoriser un déplacement de l'organe de commande par rapport à l'organe d'arrêt le long de l'axe principal de la tige de commande en empêchant la rotation relative de l'organe de commande par rapport à la tige selon l'axe (Y).

L'organe d'arrêt, ici la goupille, peut ainsi traverser la tige de commande de part en part, s'étendant ainsi dans l'orifice à l'une de ses extrémités et au moins dans le trou oblong à l'autre de ses extrémités. De la même façon que pour l'orifice du coulisseau, il existe un espace axial entre la goupille et un rebord du trou oblong, de sorte à permettre le coulissement de l'organe de commande le long de l'axe principal de la tige de commande.

Selon une caractéristique de l'invention, la tige de commande présente deux organes d'arrêt, chacun de ces organes d'arrêt s'étendant dans l'orifice d'un coulisseau, l'élément élastique étant configuré pour générer un effort qui maintient chacun des coulisseaux en appui contre l'organe d'arrêt affecté audit coulisseau.

Dans certains modes de réalisation, chaque coulisseau peut être équipé d'un orifice ; le cas échéant, la tige de commande présente deux goupilles s'étendant chacune dans l'orifice de l'un des deux coulisseaux. La fourchette de sélection est alors disposée, au moins en partie, entre un premier couple formé du premier orifice et d'une première goupille d'une part, et un second couple formé du deuxième orifice et d'une deuxième goupille d'autre part.

Comme évoqué précédemment, l'élément élastique est précontraint, par exemple comprimé, entre les deux coulisseaux. L'effort en résultant conduit à maintenir chacun des coulisseaux en appui contre la goupille qui s'étend au sein de son orifice.

Selon une autre caractéristique de l'invention, le dispositif d'accumulation d'énergie est configuré pour que l'élément élastique subisse une contrainte par une poussée de l'organe de commande contre l'un des coulisseaux. Lorsque l'organe de commande translate le long de la tige de commande, il entraîne avec lui au moins l'un des coulisseaux, qui est alors poussé en direction de l'autre coulisseau. En conséquence, en cas d'interférence, l'effort de réaction généré par l'interférence entre les dentures de crabotage est telle que l'élément élastique est comprimé ; on comprend ainsi que la translation de l'organe de commande le long de l'axe principal de la tige de commande entraîne une compression de l'élément élastique. Dès que l'interférence cesse et que les dentures de crabotage sont en correspondance angulaire, le ressort se détend de manière à déplacer la fourchette.

Selon une caractéristique, le dispositif d'accumulation d'énergie est configuré pour que l'élément élastique subisse une première contrainte lors du déplacement de l'organe de commande le long de l'axe principal selon un premier sens, et pour qu'il subisse une deuxième contrainte lors du déplacement de l'organe de commande le long de l'axe principal selon un deuxième sens, opposé au premier sens. L'organe de commande peut translater le long de l'axe principal de la tige de commande soit dans un premier sens, dans lequel il exerce une poussée sur le premier coulisseau, soit dans un deuxième sens, dans lequel il exerce une poussée sur le deuxième coulisseau. L'élément élastique subit une première contrainte lorsqu'il est comprimé selon le premier sens, et une deuxième contrainte lorsqu'il est comprimé selon le deuxième sens.

Selon une caractéristique de l'invention, l'élément élastique est configuré pour être disposé le long d'un axe de compression, cet axe de compression et l'axe principal de la tige de commande étant distincts. L'axe de compression et l'axe principal de la tige de commande peuvent par exemple être parallèles mais non confondus.

Selon une autre caractéristique de l'invention, au moins l'un des bras de l'organe de commande comprend une portée configurée pour venir en appui contre au moins un des coulisseaux. Une telle portée est en contact de la portion en forme de bague susmentionnée qui entoure la tige de commande ; elle est donc en regard de la fourchette de sélection.

Selon une caractéristique de l'invention, chaque coulisseau présente une première extension s'étendant perpendiculairement à l'axe principal, l'élément élastique étant comprimé entre les premières extensions des coulisseaux et maintenu espacé de la tige de commande.

Selon une caractéristique de l'invention, chaque coulisseau présente une première extension et une deuxième extension s'étendant chacune perpendiculairement et de part et d'autre de l'axe principal de la tige de commande, le dispositif d'accumulation d'énergie comprenant deux éléments élastiques, un premier de ces éléments élastiques étant comprimé entre les premières extensions des coulisseaux et un deuxième de ces éléments élastiques étant comprimé entre les deuxièmes extensions de ces coulisseaux.

Le dispositif d'accumulation d'énergie comprend ici un premier élément élastique et un deuxième élément élastique, chacun s'étendant entre le premier coulisseau et le deuxième coulisseau.

Le premier élément élastique et le deuxième élément élastique sont distants de la tige de commande. Ils s'étendent avantageusement parallèlement à l'axe principal Y.

Selon un autre mode de réalisation, le dispositif d'accumulation d'énergie comprend plus de deux éléments élastiques disposés, de préférence régulièrement, autour de la tige de commande.

La fourchette de sélection étant disposée entre les deux coulisseaux, on comprend par ailleurs que les éléments élastiques peuvent être placés axialement en recouvrement de cette fourchette de sélection.

Selon une caractéristique, les premières extensions des coulisseaux et, le cas échéant, les deuxièmes extensions des coulisseaux, s'étendent sensiblement orthogonalement aux premier et deuxième bras de **l'organe** de commande.

Selon une caractéristique, la fourchette de sélection présente un moyeu central et des bras d'actionnement, le moyeu central étant enfilé sur la tige de commande, ce moyeu central étant disposé entre les deux éléments élastiques. Le moyeu central de la fourchette de sélection correspond donc à sa portion qui entoure la tige de commande et permet de la solidariser à celle-ci. Selon les modes de réalisation, un même plan peut passer par le moyeu central et par les deux éléments élastiques. Les éléments élastiques sont ainsi en opposition l'un de l'autre par rapport à la tige de commande.

Selon une caractéristique de l'invention, le moyeu central est disposé sur l'axe Y axialement entre les deux coulisseaux

Selon une caractéristique de l'invention, l'élément élastique est un ressort, au moins une extension de l'un et/ou l'autre des coulisseaux comprenant au moins un organe de centrage de ce ressort.

Chaque extension de chaque coulisseau peut par exemple présenter un organe de centrage tel qu'un tenon, disposé au centre des spires du ressort.

L'invention concerne en outre une boîte de vitesses, comprenant un dispositif de sélection d'au moins un rapport tel qu'évoqué précédemment, l'actionneur électromécanique entraînant le coulissement de l'organe de commande le long de l'axe principal de la tige de commande.

Selon un mode de réalisation, la boîte de vitesse comprend un premier pignon d'un rapport de vitesse et un deuxième pignon d'un autre rapport de vitesse, la fourchette étant apte à coupler en rotation un baladeur avec l'un parmi le premier pignon et le deuxième pignon, les éléments élastiques et de préférence le dispositif d'accumulation d'énergie étant situés dans l'espace axial occupé par le premier pignon et le deuxième pignon, à savoir l'espace occupé par le premier pignon, l'espace axial occupé par le deuxième pignon et l'espace axial situé entre le premier pignon et le deuxième pignon.

La boîte de vitesses comprenant le dispositif de sélection peut donc être une boîte de vitesse robotisée, dans laquelle un actionneur électromécanique, par exemple un moteur électrique, génère la sélection d'un ou plusieurs rapports de vitesse. À cet effet, l'actionneur électromécanique présente un pion qui s'étend dans l'organe de commande et est configuré pour le déplacer. L'actionneur électromécanique effectue ainsi une rotation, qui par l'intermédiaire du pion entraîne la translation de l'organe de commande le long de la tige de commande.

Selon une caractéristique de l'invention, l'actionneur électromécanique entraîne le coulissement de l'organe de commande le long de l'axe principal selon le premier sens ou selon le deuxième sens, opposé au premier sens, de manière à sélectionner deux rapports distincts.

Le coulissement de l'organe de commande selon le premier sens peut par exemple conduire la fourchette de sélection à sélectionner un premier rapport, tandis que son coulissement selon le deuxième sens conduit la fourchette de sélection à sélectionner un deuxième rapport.

L'invention concerne aussi un groupe motopropulseur comprenant une machine électrique et la boîte de vitesse telle qu'évoquée précédemment.

Selon un mode de réalisation, la vitesse de rotation de la machine électrique peut être commandée de façon à réduire la durée de la phase d'interférence entre les dentures de crabotage du baladeur et de l'un des premier et deuxième pignons.

L'invention concerne par ailleurs un véhicule automobile comprenant une boîte de vitesses telle qu'évoquée précédemment.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
La figure 1 est une vue en perspective d'une partie d'une boîte de vitesses selon l'invention ;
La figure 2 est une vue de coupe de la boîte de vitesses de la figure 1 ;
La figure 3 est une vue en perspective d'un dispositif de sélection selon l'invention ;
La figure 4 est une vue rapprochée d'une portion du dispositif de sélection de la figure 3 ;
La figure 5 est une autre vue en perspective du dispositif de sélection de la figure 3 ;
La figure 6 est une représentation schématique du dispositif de sélection de la figure 3.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieure.

Sur les figures, les éléments communs à plusieurs figures conservent la même référence. La direction axiale s'étend selon l'axe principal Y ou parallèlement à celui-ci.

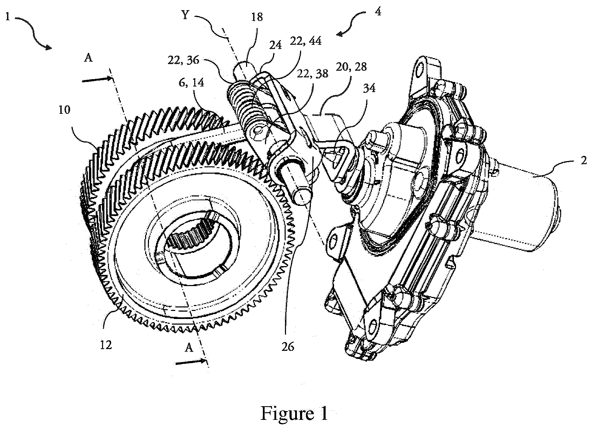

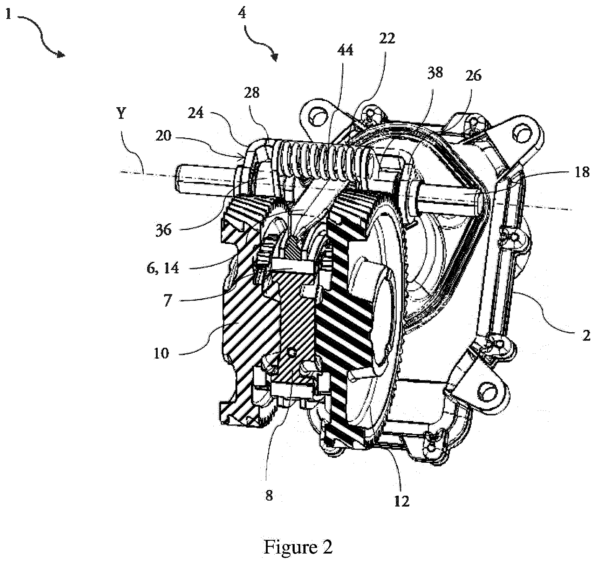

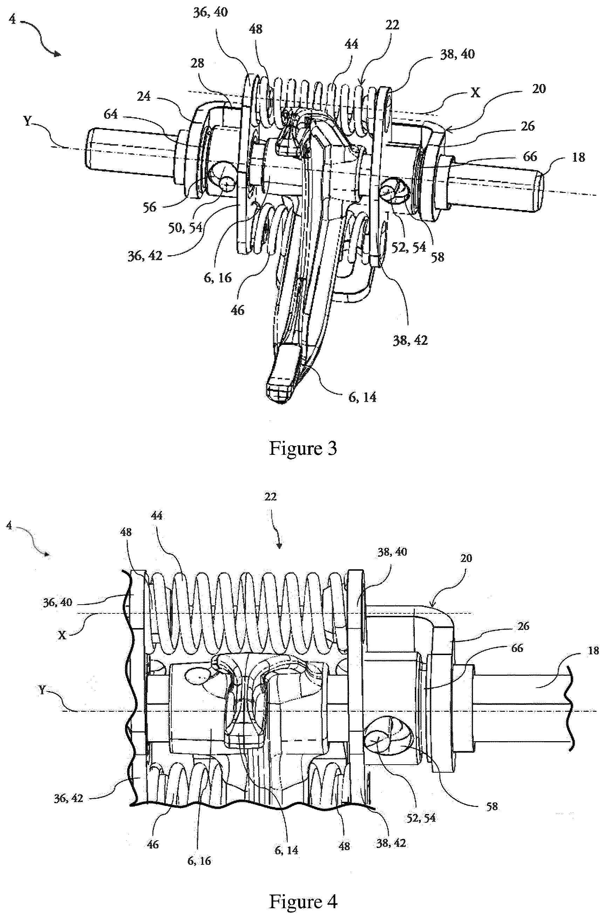

Les figures 1 et 2 illustrent ainsi, schématiquement, une partie d'une boîte de vitesses 1 selon l'invention, respectivement selon une vue en perspective et selon une vue en perspective coupée selon la coupe A La boîte de vitesses 1 peut par exemple être destinée à équiper un véhicule automobile. Cette boîte de vitesses 1 est ici une boîte de vitesses robotisée ou automatisée, c'est-à-dire qu'elle fait intervenir un actionneur tel qu'un actionneur électromécanique 2. Un tel actionneur mécanique 2 peut par exemple être un moteur électrique, qui génère la sélection d'un ou plusieurs rapports de vitesse au sein de la boîte de vitesses 1. La sélection du rapport de vitesse est par ailleurs opérée par un dispositif de sélection 4 selon l'invention, selon un mécanisme qui sera plus particulièrement décrit en relation avec les figures 3 à 6.

Le dispositif de sélection 4 est configuré pour sélectionner un rapport de vitesse par une fourchette de sélection 6. A cet effet, cette fourchette de sélection 6 permet de déplacer un baladeur 7 qui relie un moyeu d'entraînement 8 solidaire en rotation d'un arbre avec un premier pignon 10 ou un deuxième pignon 12, qui sont tous deux des pignons montés fous autour de cet arbre (non représenté). Une telle coopération entre le baladeur 7 et l'un ou l'autre des premier et deuxième pignons fous 10, 12 s'opère lorsqu'il existe une coïncidence angulaire entre les dentures de ces deux éléments.

Le baladeur étant couplé en rotation avec le moyeu d'entraînement 8 au moyen de cannelures, le crabotage du baladeur 7 avec l'un des pignons fous 10, 12 permet de coupler en rotation ce pignon fou 10, 12 avec l'arbre. De préférence les dentures de crabotage du baladeur 7 se situent dans le prolongement de ces cannelures sur chaque face latérale du baladeur 7.

Le moyeu d'entraînement 8 et le baladeur 7 sont ici disposés entre le premier pignon 10 et le deuxième pignon 12, des bras d'actionnement 14 de la fourchette de sélection 6 étant eux aussi disposés entre ces deux pignons 10, 12. Chacun de ces premier pignon 10 et deuxième pignon 12 correspond à un rapport de la boîte de vitesses 1, par exemple avec un premier rapport de vitesse pour le premier pignon 10 et un deuxième rapport de vitesse pour le deuxième pignon 12. Afin de sélectionner l'un ou l'autre de ces rapports de vitesses, la fourchette de sélection 6 peut se déplacer latéralement de sorte à effectuer un crabotage du baladeur 7 avec soit le premier pignon 10, soit le deuxième pignon 12.

Comme visible en figure 3, la fourchette de sélection 6 présente, en sus de ses bras d'actionnement 14, un moyeu central 16. Ce moyeu central 16 est monté autour d'une tige de commande 18 du dispositif de sélection 4 et est solidaire de celle-ci. Cette tige de commande 18 s'étend selon un axe principal Y et correspond par exemple à un cylindre plein. Si le moyeu central 16 de la fourchette de sélection 6 s'étend principalement le long de cet axe principal Y, ses bras d'actionnement 14 s'étendent au contraire sensiblement perpendiculairement à celui-ci.

Le dispositif de sélection 4 comprend par ailleurs un organe de commande 20 ainsi qu'un dispositif d'accumulation d'énergie 22, qui sont tous deux aptes à coulisser le long de l'axe principal Y de la tige de commande 18. L'organe de commande 20 comprend un premier bras 24 et un deuxième bras 26, qui sont joints par une plaque centrale 28. Les bras 24, 26 et la plaque centrale 28 forment un U, la plaque centrale 28 s'étendant parallèlement à la tige de commande 18, c'est à dire parallèlement à l'axe principal Y, tandis que les bras 24, 26 lui sont sensiblement perpendiculaires. Le premier bras 24 et le deuxième bras 26 comprennent chacun une fenêtre arrondie, de sorte à recevoir la tige de commande 18 et à permettre la translation de l'organe de commande 20 le long de celle-ci. Ces premier et deuxième bras 24, 26 entourent la tige de commande 18, de part et d'autre de la fourchette de sélection 8. En d'autres termes, la fourchette de sélection 8 est disposée au moins en partie entre le premier bras 24 et le deuxième bras 26. Ainsi, le moyeu central 16 peut être disposé sur la tige de commande 18 entre ces deux bras 24, 26, tandis que les bras d'actionnement de la fourchette de sélection 6 sont disposés entre un premier plan dans lequel s'étend le premier bras 24 et un deuxième plan dans lequel s'étend le deuxième bras 26, ces plans étant perpendiculaires à l'axe principal Y de la tige de commande 18.

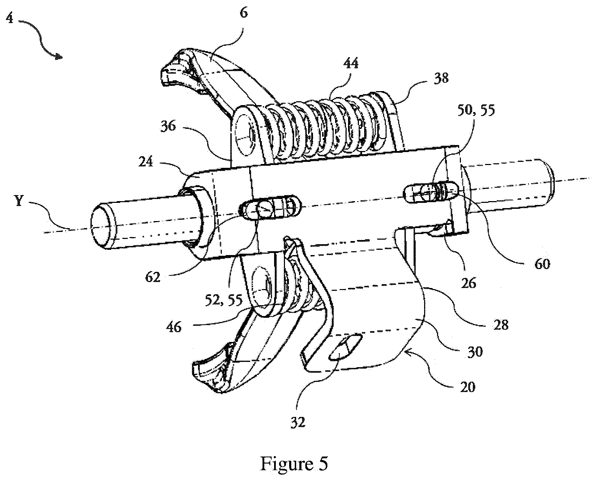

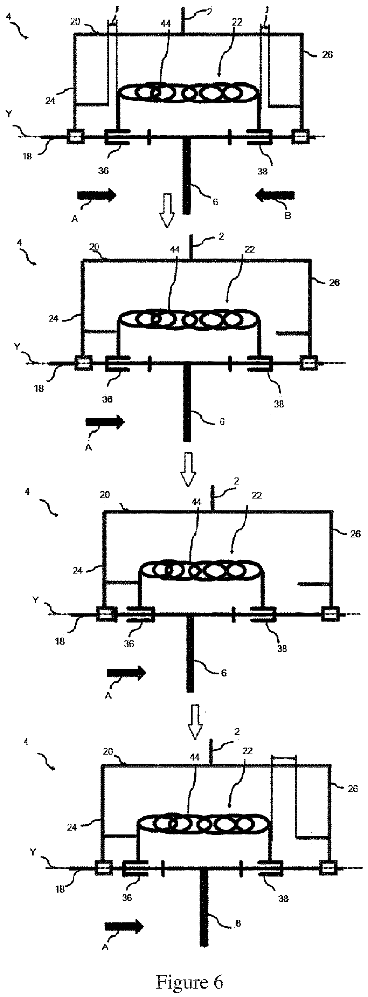

Une portion de commande 30 de l'organe de commande 20 s'étend depuis la plaque centrale 28, à distance du premier bras 24 et du deuxième bras 26. Cette portion de commande 30, particulièrement visible en figure 5, présente ici une forme coudée et est percée d'une ouverture 32. L'actionneur électromécanique 2 est relié au dispositif de sélection 4 par l'intermédiaire de cette ouverture 32. Plus précisément et tel que visible en figure 1, un pion 34 qui s'étend à partir de l'une des faces de l'actionneur électromécanique 2 est apte à s'insérer dans cette ouverture 32. Ainsi, lors du fonctionnement de l'actionneur électromécanique 2, le pion 34 est entraîné en rotation et se déplace ; puisqu'il est en butée contre une paroi de cette ouverture 32, il entraîne avec lui l'organe de commande 20, qui translate alors le long de l'axe principal Y de la tige de commande 18. Lorsque le pion 34 entre en rotation, il entraîne la translation de l'organe de commande soit selon un premier sens A, soit selon un deuxième sens B. Ces deux sens A, B sont opposés l'un à l'autre et sont représentés par des flèches en figure 6.

Le dispositif d'accumulation d'énergie 22 comprend au moins un coulisseau. Dans l'exemple décrit ici, ce dispositif d'accumulation d'énergie 22 comprend un premier coulisseau 36 et un deuxième coulisseau 38, qui translatent sur la tige de commande 18 le long de l'axe principal Y. Les coulisseaux 36, 38 présentent à cet effet une portion circulaire en forme de bague, qui est enfilée sur la tige de commande 18. Chaque coulisseau 36, 38 présente une première extension 40 et une deuxième extension 42, qui correspondent à des portions des coulisseaux 36, 38 qui s'étendent depuis la portion circulaire et perpendiculairement à la tige de commande 18. La première extension 40 et la deuxième extension 42 de chaque coulisseau 36, 38 s'étendent ici toutes deux dans un même plan, à l'opposé l'une de l'autre par rapport à la tige de commande 18.

Le premier coulisseau 36 est disposé sur la tige de commande 18 entre le premier bras 24 de l'organe de commande 20 et le moyeu central 16 de la fourchette de sélection 6, tandis que le deuxième coulisseau 38 est disposé entre ce moyeu central 16 et le deuxième bras 26 de l'organe de commande 20. On comprend ainsi que la fourchette de sélection 6 est disposée sur la tige de commande 18 entre les premier et deuxième coulisseaux 36, 38, eux-mêmes disposés entre les premier et deuxième bras 24, 26 de l'organe de commande 20.

Selon l'invention, au moins un élément élastique s'étend entre les coulisseaux 36, 38. Sur le mode de réalisation représenté sur les figures, le dispositif d'accumulation d'énergie 22 présente un premier élément élastique 44 qui s'étend entre la première extension 40 du premier coulisseau 36 et la première extension 40 du deuxième coulisseau 38, et un deuxième élément élastique 46 qui s'étend entre la deuxième extension 42 du premier coulisseau 36 et la deuxième extension 42 du deuxième coulisseau 38. Les éléments élastiques 44, 46 sont ainsi en recouvrement axial de la fourchette de sélection 6, le moyeu central 16 de cette fourchette de sélection 6 s'étendant ici dans un même plan que ces des directions d'extension de ces éléments élastiques 44, 46. Autrement dit, les axes d'extension des éléments élastiques 44, 46 et l'axe principal Y sont agencés dans un même plan.

De tels éléments élastiques 44, 46 sont par exemple des ressorts. Ils sont précontraints entre les extensions 40, 42 respectives, c'est-à-dire au moins partiellement comprimés entre le premier coulisseau 36 et le deuxième coulisseau 38. Du fait de cette précontrainte, on comprend que les éléments élastiques 44, 46 opèrent à leurs extrémités une poussée sur chacun de ces coulisseaux 36, 38.

Tel qu'illustré en figure 4, afin d'assurer le maintien des éléments élastiques 44, 46 au sein du dispositif d'accumulation d'énergie les premier et deuxième coulisseaux 36, 38 peuvent présenter des organes de centrage 48. De tels organes de centrage 48 peuvent par exemple être des tenons emboutis sur les extensions 40, 42, autour desquels des spires des ressorts constituant les éléments élastiques 44, 46 sont au moins en partie entourées.

Les éléments élastiques 44, 46 sont configurés pour être contraints, notamment lors de la translation de l'un ou de l'autre des coulisseaux 36, 38 le long de la tige de commande 18, selon un axe de compression X. Cet axe de compression X peut par exemple être parallèle à l'axe principal Y de la tige de commande 18 mais non confondu avec celui-ci.

La tige de commande 18 est équipée d'au moins un organe d'arrêt qui peut prendre la forme d'une goupille. Tel qu'il est visible sur les figures, la tige de commande 18 présente ici une première goupille 50 et une deuxième goupille 52, qui la traversent de part en part. Ces goupilles 50, 52 s'étendent ainsi perpendiculairement à l'axe principal Y, une première de leurs extrémités 54 étant dirigée en direction des pignons 8, 10, 12 tandis qu'une deuxième de leurs extrémités 55 est dirigée en direction de l'actionneur électromécanique 2.

Les goupilles 50, 52 sont disposées sur la tige de commande 18 de part et d'autre, axialement, de la fourchette de sélection 8. Plus précisément, la première extrémité 54 de la première goupille 50 s'étend au sein d'un premier orifice 56 porté par la portion en forme de bague du premier coulisseau36, tandis que la première extrémité 54 de la deuxième goupille 52 s'étend au sein d'un deuxième orifice 58 porté par la portion en forme de bague du deuxième coulisseau 38. De la même façon, les goupilles 50, 52 traversent respectivement deux orifices disposés sur les premier et deuxième coulisseaux 36, 38 de façon à être opposés aux premier et deuxième orifices 56, 58 selon l'axe des goupilles 50, 52. Par ailleurs, la deuxième extrémité 55 de la première goupille 50 s'étend au sein d'un premier trou oblong 60 porté par la plaque centrale 28 de l'organe de commande 20, tandis que la deuxième extrémité 55 de la deuxième goupille 52 s'étend au sein d'un deuxième trou oblong 62 lui aussi porté par cette la plaque centrale 28. Les premier et deuxième orifices 56, 58 sont notamment représentés en figure 3, alors que les premier et deuxième trous oblongs 60, 62 sont visibles à la figure 5.

Les orifices 56, 58 des coulisseaux 36, 38 sont configurés pour autoriser un déplacement de ces coulisseaux 36, 38 par rapport aux goupilles 50, 52 le long de l'axe principal Y, à la fois dans le premier sens A ou dans le deuxième sens B. À cet effet, il existe un espace axial entre une paroi périphérique de ces orifices 56, 58 et les extrémités 54, 56 des goupilles 50, 52 qu'ils reçoivent. Un tel espace axial est particulièrement visible à la figure 4. Plus précisément, les parois périphériques des orifices 56, 58 comprennent des portions internes qui sont les portions de ces parois les plus proches axialement de la fourchette de sélection 6, ainsi que des portions externes qui sont les plus éloignées axialement de cette fourchette de sélection 6. Ce sont ces portions internes qui sont au contact des goupilles 50, 52, alors que l'espace axial existe entre ces goupilles 50, 52 et les portions externes, quand le dispositif de sélection 4 objet de l'invention est à l'état repos.

Similairement et comme visible en figure 5, les trous oblongs 60, 62 de l'organe de commande 20 sont configurés pour autoriser un déplacement de cet organe de commande 20 par rapport aux goupilles 50, 52 le long de l'axe principal Y, à la fois dans le premier sens A ou dans le deuxième sens B. Il existe ici aussi un intervalle entre un rebord périphérique des trous oblongs 60, 62 et les deuxièmes extrémités 56 des goupilles 50, 52. Il existe ici un intervalle de part et d'autre des goupilles 50, 52 parallèlement à l'axe principal Y de la tige de commande 18.

Comme évoqué précédemment, les éléments élastiques 44, 46 sont précontraints, par exemple comprimés, entre les coulisseaux 36, 38. Une telle précontrainte a pour effet de générer un effort qui maintient le premier coulisseau 36 en appui contre la première goupille 50 et le deuxième coulisseau 38 en appui contre la deuxième goupille 52. On comprend qu'un tel appui s'effectue contre la portion axialement interne des orifices 56, 58 tel que cela a été décrit ci-dessus.

Au sein du dispositif de sélection 4, le dispositif d'accumulation d'énergie 22 est au contact de l'organe de commande 20. À cet effet et comme illustré notamment aux figures 3 et 4, les bras 24, 26 de cet organe de commande 20 présentent chacun une portée destinée à pousser l'un des coulisseaux 36, 38. Une première portée 64 est ménagée sur le premier bras 24 et une deuxième portée 66 sur le deuxième bras 26. Ces portées 64, 66 sont configurées pour venir en appui contre les coulisseaux 36, 38 ; plus spécifiquement, la première portée 64 est configurée pour venir en appui contre la portion en forme de bague du premier coulisseau 36 et la deuxième portée 66 est configurée pour venir en appui contre la portion en bague du deuxième coulisseau 38. Ces portées 64, 66 représentent la zone des bras 24, 26 qui pousse le coulisseau concerné lorsque l'engagement d'une vitesse est souhaité.

Comme représenté en figure 6, un jeu de montage j peut être présent entre chaque coulisseau 36, 38 et le bras 24, 26 de l'organe de commande 20 associé.

Selon l'invention, le dispositif d'accumulation d'énergie 22 est configuré pour que les éléments élastiques 44, 46 subissent une contrainte par une poussée de l'organe de commande 20 contre l'un des coulisseaux 36, 38. Une telle poussée correspond à une translation de cet organe de commande 20 le long de l'axe principal Y de la tige de commande 18, soit selon le premier sens A auquel cas la poussée s'effectuera contre le premier coulisseau 36, soit selon le deuxième sens B auquel cas la poussée s'effectuera contre le deuxième coulisseau 38. Ainsi, si l'organe de commande 20 est entraîné par l'actionneur électromécanique 2 de façon à translater selon le premier sens A, en cas d'interférence au niveau du dispositif de crabotage, sa première portée 64 appuiera contre le premier coulisseau 36 et contraindra les éléments élastiques 44, 46 jusqu'à temps que la première goupille 50 ne soit plus en contact avec la portion axialement interne de la paroi périphérique du premier orifice 56 mais en cas de compression maximale du ressort avec sa portion axialement externe, qui est donc celle qui est à distance de la fourchette de sélection 6. Inversement, si l'actionneur électromécanique 2 entraîne l'organe de commande 18 sur la tige de commande 18 selon le deuxième sens B, sa deuxième portée 66 viendra en appui contre le deuxième coulisseau 38 et les éléments élastiques 44, 46 seront contraints jusqu'à ce que la deuxième goupille 52 entre en contact avec la portion axialement externe de la paroi périphérique du deuxième orifice 58, qui aura alors une fonction de butée. Les éléments élastiques 44, 46 subissent ainsi une première contrainte lorsque l'organe de commande 20 se déplace selon le premier sens A, et une deuxième contrainte lorsque cet organe de commande 18 se déplace selon le deuxième sens B.

L'entraînement de l'organe de commande 20 par l'actionneur électromécanique 2 selon le premier sens A et selon le deuxième sens B permet à la fourchette de sélection 6 de sélectionner deux rapports de vitesses distincts. Un déplacement selon le premier sens A, qui entraînera le crabotage du baladeur 7 avec le deuxième pignon 12, peut par exemple correspondre à la sélection d'un premier rapport de vitesse, tandis qu'un déplacement selon le deuxième sens B entraînera le crabotage du baladeur 7 avec le premier pignon 10 et pourra conduire à la sélection d'un autre rapport de vitesse.

Une telle sélection est facilitée par le dispositif d'accumulation d'énergie 22 en ce que les contraintes exercées sur les éléments élastiques 44, 46 permettent d'accumuler de l'énergie lors de l'attente de la coïncidence angulaire évoquée précédemment entre la fourchette de sélection 6 et le baladeur 7 d'une part, et l'un des premier ou deuxième pignons 10, 12 d'autre part. Ainsi, lorsque l'organe de commande 20 vient en appui contre l'un ou l'autre des coulisseaux 36, 38 et exerce une poussée, les éléments élastiques 44, 46 confèrent une souplesse axiale au déplacement de la fourchette de sélection 6, dans l'attente de la coïncidence angulaire qui permettra le crabotage du baladeur 7avec le premier pignon 10 ou le deuxième pignon 12. Une fois cette coïncidence angulaire obtenue, les éléments élastiques 44, 46 se détendent rapidement et propulsent alors la fourchette de sélection 6 contre l'un ou l'autre des premier et deuxième pignons 10, 12, permettant alors leur crabotage.

Sur le troisième schéma de la figure 6, on voit que deux appuis axiaux sont possibles pour limiter la translation relative entre le premier coulisseau 36 et la tige de commande 18 dans le sens de poussée A : à savoir un appui entre l'organe de commande 20 et la tige de commande 18 et/ou un appui directement entre le premier coulisseau 36 et la tige de commande 18. Les deux arrêts sont représentés sur ce schéma mais un seul arrêt peut être suffisant pour limiter la translation relative entre le premier coulisseau 36 et la tige de commande 18.

La présente invention propose ainsi un dispositif de sélection équipé d'un dispositif d'accumulation d'énergie qui confère une souplesse de déplacement à une fourchette de sélection et présente par ailleurs un encombrement axial réduit, ce qui permet un gain de place au sein d'une boîte de vitesses.

La présente invention ne saurait toutefois se limiter aux moyens et configurations décrits et illustrés ici. La présente invention est définie par les revendications suivantes.

## Revendications

1. Dispositif de sélection (4) d'au moins un rapport au sein d'une boîte de vitesses (1), comprenant une tige de commande (18) s'étendant selon un axe principal (Y), une fourchette de sélection (6) d'au moins un rapport solidaire de cette tige de commande (18), un organe de commande (20) coulissant sur la tige de commande (18) le long de l'axe principal (Y), le dispositif de sélection (4) comprenant au moins un dispositif d'accumulation d'énergie (22) de la sélection d'au moins un rapport, le dispositif d'accumulation d'énergie (22) comprenant au moins deux coulisseaux (36, 38) entre lesquels est interposé au moins un élément élastique (44, 46), chaque coulisseau (36, 38) étant apte à translater sur la tige de commande (18) le long de l'axe principal (Y), et l'organe de commande (20) comprenant au moins un premier bras (24) et un deuxième bras (26) chacun apte à pousser axialement respectivement l'un des coulisseaux (36, 38) le long de l'axe principal (Y) à l'encontre d'un effort de rappel exercé par l'élément élastique (44, 46), le dispositif de sélection (4) étant **caractérisé en ce que** le dispositif d'accumulation d'énergie (22) et la fourchette de sélection (6) sont disposés axialement entre le premier bras (24) de l'organe de commande (20) et le deuxième bras (26) de l'organe de commande (20).

2. Dispositif de sélection (4) selon la revendication précédente, dans lequel le dispositif de sélection (4) comprend au moins deux dispositifs d'arrêt (50, 52 ; 56, 58), chaque dispositif d'arrêt étant associé à l'un des coulisseaux (36, 38) en le retenant par rapport à la tige de commande (18), dans une position de repos de l'organe de commande (20), en s'opposant à l'effort exercé par l'élément élastique (44, 46).

3. Dispositif de sélection (4) selon la revendication précédente, dans lequel au moins un des coulisseaux (36, 38) comprend au moins un orifice (56, 58), la tige de commande (18) présentant au moins un organe d'arrêt (50, 52) qui s'étend dans cet orifice (56, 58), l'orifice (56, 58) étant configuré pour autoriser un déplacement du coulisseau (36, 38) par rapport à l'organe d'arrêt (50, 52) le long de l'axe principal (Y) de la tige de commande (18).

4. Dispositif de sélection (4) selon la revendication précédente, dans lequel l'organe de commande (20) comprend au moins un trou oblong (60, 62), l'organe d'arrêt (50, 52) s'étendant dans ce trou oblong (60, 62), le trou oblong (60, 62) étant configuré pour autoriser un déplacement de l'organe de commande (20) par rapport à l'organe d'arrêt (50, 52) le long de l'axe principal (Y) de la tige de commande (18) en empêchant la rotation relative de l'organe de commande (20) par rapport à la tige (18) selon l'axe (Y).

5. Dispositif de sélection (4) selon l'une quelconque des revendications précédentes en combinaison avec la revendication 2, dans lequel la tige de commande (18) présente deux organes d'arrêt (50, 52), chacun de ces organes d'arrêt (50, 52) s'étendant dans l'orifice (56, 58) d'un coulisseau (36, 38), l'élément élastique (44, 46) étant configuré pour générer un effort qui maintient chacun des coulisseaux (36, 38) en appui contre l'organe d'arrêt (50, 52) affecté audit coulisseau (36, 38).

6. Dispositif de sélection (4) selon l'une quelconque des revendications précédentes, dans lequel le dispositif d'accumulation d'énergie (22) est configuré pour que l'élément élastique (44, 46) subisse une première contrainte lors du déplacement de l'organe de commande (20) le long de l'axe principal (Y) selon un premier sens (A), et pour qu'il subisse une deuxième contrainte lors du déplacement de l'organe de commande (20) le long de l'axe principal (Y) selon un deuxième sens (B), opposé au premier sens (A).

7. Dispositif de sélection (4) selon l'une quelconque des revendications précédentes, dans lequel l'élément élastique (44, 46) est configuré pour être disposé le long d'un axe de compression (X), cet axe de compression (X) et l'axe principal (Y) de la tige de commande (18) étant distincts.

8. Dispositif de sélection (4) selon l'une quelconque des revendications précédentes, dans lequel chaque coulisseau (36, 38) présente une première extension (40) s'étendant perpendiculairement à l'axe principal (Y), l'élément élastique (44, 46), étant comprimé entre les premières extensions (40) des coulisseaux (36, 38) et maintenu espacé de la tige de commande (18).

9. Dispositif de sélection (4) selon l'une quelconque des revendications précédentes, dans lequel chaque coulisseau (36, 38) présente une première extension (40) et une deuxième extension (42) s'étendant chacune perpendiculairement à l'axe principal (Y), le dispositif d'accumulation d'énergie comprenant deux éléments élastiques (44, 46), un premier de ces éléments élastiques (44) étant comprimé entre les premières extensions (40) des coulisseaux (36, 38) et un deuxième de ces éléments élastiques (46) étant comprimé entre les deuxièmes extensions (42) de ces coulisseaux (36, 38).

10. Dispositif de sélection (4) selon les revendications 8 et 9, dans lequel les premières extensions des coulisseaux et, le cas échéant, les deuxièmes extensions des coulisseaux, s'étendent sensiblement orthogonalement aux premier et deuxième bras de l'organe de commande.

11. Dispositif de sélection (4) selon la revendication précédente, dans lequel la fourchette de sélection (6) présente un moyeu central (16) et des bras d'actionnement (14), le moyeu central (16) étant enfilé sur la tige de commande (18), ce moyeu central (16) étant disposé entre les deux éléments élastiques (44, 46).

12. Dispositif de sélection (4) selon l'une quelconque des revendications précédentes en combinaison avec la revendication 9, dans lequel l'élément élastique (44, 46) est un ressort, au moins une extension (40, 42) de l'un et/ou de l'autre des coulisseaux (36, 38) comprenant au moins un organe de centrage (48) de ce ressort.

13. Boîte de vitesses (1), comprenant un dispositif de sélection (4) selon l'une quelconque des revendications 1 à 11 et un actionneur électromécanique (2), l'actionneur électromécanique (2) entraînant le coulissement de l'organe de commande (20) le long de l'axe principal (Y) de la tige de commande (18).

14. Boîte de vitesses (1) selon la revendication précédente comprenant un premier pignon d'un rapport de vitesse et un deuxième pignon d'un autre rapport de vitesse, la fourchette (6) étant apte à coupler en rotation un baladeur (7) avec l'un parmi le premier pignon et le deuxième pignon, les éléments élastiques (44, 46) et de préférence le dispositif d'accumulation d'énergie (22) étant situés dans l'espace axial occupé par le premier pignon et le deuxième pignon.

## Patentansprüche

1. Vorrichtung zur Auswahl (4) von mindestens einem Gang in einem Getriebe (1), umfassend eine Steuerstange (18), die sich entlang einer Hauptachse (Y) erstreckt, eine Schaltgabel (6) zur Auswahl von mindestens einem Gang, die fest mit dieser Steuerstange (18) verbunden ist, ein Steuerelement (20), das auf der Steuerstange (18) entlang der Hauptachse (Y) gleitet, wobei die Auswahlvorrichtung (4) mindestens eine Energiespeichervorrichtung (22) für die Auswahl von mindestens einem Gang umfasst, wobei die Energiespeichervorrichtung (22) mindestens zwei Gleitstücke (36, 38) umfasst, zwischen denen mindestens ein elastisches Element (44, 46) angeordnet ist, wobei jedes Gleitstück (36, 38) geeignet ist, auf der Steuerstange (18) entlang der Hauptachse (Y) zu gleiten, und das Steuerelement (20) mindestens einen ersten Arm (24) und einen zweiten Arm (26) umfasst, die jeweils geeignet sind, eines der Gleitstücke (36, 38) axial entlang der Hauptachse (Y) gegen eine Rückstellkraft zu drücken, die durch das elastische Element (44, 46) ausgeübt wird, wobei die Auswahlvorrichtung (4) **dadurch gekennzeichnet ist, dass** die Energiespeichervorrichtung (22) und die Schaltgabel (6) axial zwischen dem ersten Arm (24) des Steuerelements (20) und dem zweiten Arm (26) des Steuerelements (20) angeordnet sind.

2. Auswahlvorrichtung (4) nach dem vorhergehenden Anspruch, wobei die Auswahlvorrichtung (4) mindestens zwei Anschlagvorrichtungen (50, 52; 56, 58) umfasst, wobei jede Anschlagvorrichtung einem der Gleitstücke (36, 38) zugeordnet ist, indem sie es in Bezug auf die Steuerstange (18) in einer Ruheposition des Steuerelements (20) hält und sich der durch das elastische Element (44, 46) ausgeübten Kraft widersetzt.

3. Auswahlvorrichtung (4) nach dem vorhergehenden Anspruch, wobei mindestens eines der Gleitstücke (36, 38) mindestens eine Öffnung (56, 58) umfasst, wobei die Steuerstange (18) mindestens ein Anschlagelement (50, 52) aufweist, das sich in diese Öffnung (56, 58) erstreckt, wobei die Öffnung (56, 58) so konfiguriert ist, dass sie eine Bewegung des Gleitstücks (36, 38) in Bezug auf das Anschlagelement (50, 52) entlang der Hauptachse (Y) der Steuerstange (18) ermöglicht.

4. Auswahlvorrichtung (4) nach dem vorhergehenden Anspruch, wobei das Steuerelement (20) mindestens ein Langloch (60, 62) umfasst, wobei sich das Anschlagelement (50, 52) in dieses Langloch (60, 62) erstreckt, wobei das Langloch (60, 62) so konfiguriert ist, dass es eine Bewegung des Steuerelements (20) in Bezug auf das Anschlagelement (50, 52) entlang der Hauptachse (Y) der Steuerstange (18) ermöglicht und die relative Drehung des Steuerelements (20) in Bezug auf die Stange (18) um die Achse (Y) verhindert.

5. Auswahlvorrichtung (4) nach einem der vorhergehenden Ansprüche in Kombination mit Anspruch 2, wobei die Steuerstange (18) zwei Anschlagelemente (50, 52) aufweist, wobei sich jedes dieser Anschlagelemente (50, 52) in die Öffnung (56, 58) eines Gleitstücks (36, 38) erstreckt, wobei das elastische Element (44, 46) so konfiguriert ist, dass es eine Kraft erzeugt, die jedes der Gleitstücke (36, 38) gegen das dem Gleitstück (36, 38) zugeordnete Anschlagelement (50, 52) drückt.

6. Auswahlvorrichtung (4) nach einem der vorhergehenden Ansprüche, wobei die Energiespeichervorrichtung (22) so konfiguriert ist, dass das elastische Element (44, 46) einer ersten Spannung bei der Bewegung des Steuerelements (20) entlang der Hauptachse (Y) in einer ersten Richtung (A) unterliegt, und einer zweiten Spannung bei der Bewegung des Steuerelements (20) entlang der Hauptachse (Y) in einer zweiten Richtung (B), die der ersten Richtung (A) entgegengesetzt ist.

7. Auswahlvorrichtung (4) nach einem der vorhergehenden Ansprüche, wobei das elastische Element (44, 46) so konfiguriert ist, dass es entlang einer Kompressionsachse (X) angeordnet ist, wobei diese Kompressionsachse (X) und die Hauptachse (Y) der Steuerstange (18) unterschiedlich sind.

8. Auswahlvorrichtung (4) nach einem der vorhergehenden Ansprüche, wobei jedes Gleitstück (36, 38) eine erste Erweiterung (40) aufweist, die sich senkrecht zur Hauptachse (Y) erstreckt, wobei das elastische Element (44, 46) zwischen den ersten Erweiterungen (40) der Gleitstücke (36, 38) komprimiert und von der Steuerstange (18) beabstandet gehalten wird.

9. Auswahlvorrichtung (4) nach einem der vorhergehenden Ansprüche, wobei jedes Gleitstück (36, 38) eine erste Erweiterung (40) und eine zweite Erweiterung (42) aufweist, die sich jeweils senkrecht zur Hauptachse (Y) erstrecken, wobei die Energiespeichervorrichtung zwei elastische Elemente (44, 46) umfasst, wobei ein erstes dieser elastischen Elemente (44) zwischen den ersten Erweiterungen (40) der Gleitstücke (36, 38) komprimiert ist und ein zweites dieser elastischen Elemente (46) zwischen den zweiten Erweiterungen (42) dieser Gleitstücke (36, 38) komprimiert ist.

10. Auswahlvorrichtung (4) nach den Ansprüchen 8 und 9, wobei sich die ersten Erweiterungen der Gleitstücke und gegebenenfalls die zweiten Erweiterungen der Gleitstücke im Wesentlichen orthogonal zum ersten und zweiten Arm des Steuerelements erstrecken.

11. Auswahlvorrichtung (4) nach dem vorhergehenden Anspruch, wobei die Schaltgabel (6) eine zentrale Nabe (16) und Betätigungsarme (14) aufweist, wobei die zentrale Nabe (16) auf die Steuerstange (18) aufgefädelt ist, wobei diese zentrale Nabe (16) zwischen den beiden elastischen Elementen (44, 46) angeordnet ist.

12. Auswahlvorrichtung (4) nach einem der vorhergehenden Ansprüche in Kombination mit Anspruch 9, wobei das elastische Element (44, 46) eine Feder ist, wobei mindestens eine Erweiterung (40, 42) des einen und/oder des anderen der Gleitstücke (36, 38) mindestens ein Zentrierelement (48) für diese Feder umfasst.

13. Getriebe (1), umfassend eine Auswahlvorrichtung (4) nach einem der Ansprüche 1 bis 11 und einen elektromechanischen Aktuator (2), wobei der elektromechanische Aktuator (2) das Gleiten des Steuerelements (20) entlang der Hauptachse (Y) der Steuerstange (18) antreibt.

14. Getriebe (1) nach dem vorhergehenden Anspruch, umfassend ein erstes Zahnrad eines Gangs und ein zweites Zahnrad eines anderen Gangs, wobei die Gabel (6) geeignet ist, eine Schiebemuffe (7) mit einem unter dem ersten Zahnrad und dem zweiten Zahnrad drehfest zu koppeln, wobei die elastischen Elemente (44, 46) und vorzugsweise die Energiespeichervorrichtung (22) in dem axialen Raum angeordnet sind, der vom ersten Zahnrad und dem zweiten Zahnrad eingenommen wird.

## Claims

1. Selection device (4) of at least one gear within a gearbox (1), comprising a control rod (18) extending along a main axis (Y), a selection fork (6) of at least one gear fixed to this control rod (18), a control member (20) sliding on the control rod (18) along the main axis (Y), the selection device (4) comprising at least one energy accumulation device (22) for the selection of at least one gear, the energy accumulation device (22) comprising at least two sliding blocks (36, 38) between which is interposed at least one elastic element (44, 46), each sliding block (36, 38) being able to translate on the control rod (18) along the main axis (Y), and the control member (20) comprising at least a first arm (24) and a second arm (26) each capable of axially pushing respectively one of the sliding blocks (36, 38) along the main axis (Y) against a return force exerted by the elastic element (44, 46), the selection device (4) being **characterized in that** the energy accumulation device (22) and the selection fork (6) are axially arranged between the first arm (24) of the control member (20) and the second arm (26) of the control member (20).

2. Selection device (4) according to the preceding claim, wherein the selection device (4) comprises at least two stop devices (50, 52; 56, 58), each stop device being associated with one of the sliding blocks (36, 38) by holding it relative to the control rod (18), in a rest position of the control member (20), by opposing the force exerted by the elastic element (44, 46).

3. Selection device (4) according to the preceding claim, wherein at least one of the sliding blocks (36, 38) comprises at least one orifice (56, 58), the control rod (18) having at least one stop member (50, 52) that extends into this orifice (56, 58), the orifice (56, 58) being configured to allow movement of the sliding block (36, 38) relative to the stop member (50, 52) along the main axis (Y) of the control rod (18).

4. Selection device (4) according to the preceding claim, wherein the control member (20) comprises at least one oblong hole (60, 62), the stop member (50, 52) extending into this oblong hole (60, 62), the oblong hole (60, 62) being configured to allow movement of the control member (20) relative to the stop member (50, 52) along the main axis (Y) of the control rod (18) while preventing relative rotation of the control member (20) relative to the rod (18) about the axis (Y).

5. Selection device (4) according to any one of the preceding claims in combination with claim 2, wherein the control rod (18) has two stop members (50, 52), each of these stop members (50, 52) extending into the orifice (56, 58) of a sliding block (36, 38), the elastic element (44, 46) being configured to generate a force that maintains each of the sliding blocks (36, 38) in contact with the stop member (50, 52) assigned to said sliding block (36, 38).

6. Selection device (4) according to any one of the preceding claims, wherein the energy accumulation device (22) is configured so that the elastic element (44, 46) undergoes a first stress during the movement of the control member (20) along the main axis (Y) in a first direction (A), and so that it undergoes a second stress during the movement of the control member (20) along the main axis (Y) in a second direction (B), opposite to the first direction (A).

7. Selection device (4) according to any one of the preceding claims, wherein the elastic element (44, 46) is configured to be arranged along a compression axis (X), this compression axis (X) and the main axis (Y) of the control rod (18) being distinct.

8. Selection device (4) according to any one of the preceding claims, wherein each sliding block (36, 38) has a first extension (40) extending perpendicular to the main axis (Y), the elastic element (44, 46) being compressed between the first extensions (40) of the sliding blocks (36, 38) and maintained spaced from the control rod (18).

9. Selection device (4) according to any one of the preceding claims, wherein each sliding block (36, 38) has a first extension (40) and a second extension (42) each extending perpendicular to the main axis (Y), the energy accumulation device comprising two elastic elements (44, 46), a first of these elastic elements (44) being compressed between the first extensions (40) of the sliding blocks (36, 38) and a second of these elastic elements (46) being compressed between the second extensions (42) of these sliding blocks (36, 38).

10. Selection device (4) according to claims 8 and 9, wherein the first extensions of the sliding blocks and, if applicable, the second extensions of the sliding blocks, extend substantially orthogonally to the first and second arms of the control member.

11. Selection device (4) according to the preceding claim, wherein the selection fork (6) has a central hub (16) and actuation arms (14), the central hub (16) being threaded onto the control rod (18), this central hub (16) being arranged between the two elastic elements (44, 46).

12. Selection device (4) according to any one of the preceding claims in combination with claim 9, wherein the elastic element (44, 46) is a spring, at least one extension (40, 42) of one and/or the other of the sliding blocks (36, 38) comprising at least one centering member (48) for this spring.

13. Gearbox (1), comprising a selection device (4) according to any one of claims 1 to 11 and an electromechanical actuator (2), the electromechanical actuator (2) driving the sliding of the control member (20) along the main axis (Y) of the control rod (18).

14. Gearbox (1) according to the preceding claim comprising a first gear of a gear ratio and a second gear of another gear ratio, the fork (6) being able to rotationally couple a sliding gear (7) with one of the first gear and the second gear, the elastic elements (44, 46) and preferably the energy accumulation device (22) being located in the axial space occupied by the first gear and the second gear.
